# DEMANDE DE BREVET EUROPEEN

(11) **EP 1 164 529 A1**
(43) Date de publication de la demande: **19.12.2001**
(21) Numéro de dépôt: 01401585.3
(22) Date de dépôt: 15.06.2001
(51) Int. Cl.: G06F 17/60

(54) **Système et procédé de couponnage électronique**

(30) Priorité: 15.06.2000 FR 0007640
(71) Demandeur: Ekoopon, 93500 Pantin (FR)
(72) Inventeur: Lerat, Gilles, 75019 Paris (FR)
(74) Mandataire: Breese, Pierre

(57) **Abrégé**

La présente invention concerne un procédé et un système pour le couponnage électronique comprenant un serveur et des postes clients reliés par un réseau électronique [du type Internet], le serveur comportant une unité centrale et des moyens de mémoire pour l'émission de coupons numériques, et les postes clients comportant des moyens pour la gestion électronique des coupons, le poste client comprenant des moyens pour effectuer auprès d'un serveur de coupons une demande de téléchargement de coupons de réductions, le serveur comprenant des moyens pour générer des coupons électroniques constitués par des fichiers signés numériquement, caractérisé en ce que le serveur comprenant des moyens pour générer, sur une requête d'un poste client, une instance d'un coupon comprenant l'ensemble des informations caractérisant le coupon ainsi qu'un numéro de série unique, et pour signer et envoyer ledit coupon numérique au client qui conserve cette instance sur son portefeuille de coupons sous forme de fichier.

## Description

La présente invention concerne le domaine du couponnage électronique, et plus particulièrement un système pour générer, certifier, échanger, vérifier et faire valoir des coupons de réductions électroniques sur un réseau public tel qu'Internet ou éventuellement sur des réseaux privés ou encore des réseaux de télécommunications exploitant des terminaux tels que des téléphones cellulaires et des postes de télévision.

Les coupons de réductions sont connus dans monde réel. Ils sont utilisés depuis très longtemps par des centres de distribution tels que des supermarchés pour attirer des clients.

Ils sont notamment inclus sous formes d'encarts publicitaires dans les journaux et la presse spécialisée et doivent être découpés par les consommateurs qui les présentent devant les centres marchands à titre de preuve.

Avec la montée d'Internet en tant que média majeur pour le commerce électronique, le modèle du couponnage à été transposé sur Internet.

Un certain nombre de sites de commerce électronique ont été créés avec l'objectif d'indiquer aux consommateurs qui visitent le site en question où trouver les réductions.

La plupart des coupons qui se trouvent sur Internet sont en fait des images qui doivent être imprimées en utilisant l'imprimante de l'utilisateur, puis envoyés par voie postale ou utilisés dans des supermarchés physiques.

D'autres types de coupons virtuels sont en fait des messages envoyés sur la boîte aux lettres d'un utilisateur. Pour bénéficier de la réduction, l'utilisateur doit se rendre à l'adresse Internet indiquée dans le corps du message. Dans certains cas, l'utilisateur doit donner un mot de passe indiqué au préalable dans un message électronique pour valider son droit à la réduction.

Dans le premier cas où les coupons sont imprimés, il est difficile de s'en servir pour acheter sur un site marchand vendant exclusivement sur Internet. Étant donné que le coupon doit être en premier lieu envoyé par voie postale, il est pratiquement impossible de bénéficier de la réduction en même temps que l'acte d'achat.

Dans le second cas, il n'y a pas de moyen simple permettant de s'assurer que le bénéficiaire de la réduction associée au coupon est celui qui l'a reçu en premier lieu. Dans le cadre des systèmes à base de mots de passe, l'utilisateur doit se rappeler chaque mot de passe associé à chaque offre promotionnelle indiquée dans le message.

Par ailleurs, aucune manière standard n'existe permettant d'informer l'utilisateur de la période de début et de fin de validité du coupon. Cette information doit être écrite quelque part à l'intérieur du message.

Sur Internet, le couponnage a évolué à partir des systèmes d'images « à clicker » et à imprimer, des réductions protégées par mot de passe, jusqu'à des systèmes permettant un transfert d'informations, notamment par voie de Cookies permettant à un serveur (le serveur de coupons) de reconnaître un client (l'utilisateur).

Une image « à clicker » pointe sur une page située chez le serveur marchand qui propose une réduction immédiate. L'utilisateur doit acheter à partir du moment où il voit l'offre promotionnelle. Aucune information n'est conservée du côté du client pour lui rappeler l'offre promotionnelle.

Les techniques à base de mots de passe se focalisent sur la connaissance plutôt que sur la possession.

Un message est envoyé aux utilisateurs par messagerie électronique ou par d'autres moyens de communication. Le message contient une description de la réduction et un mot de passe utilisé en tant que méthode d'authentification qui doit être indiqué au moment de l'achat sur une boutique en ligne, afin d'obtenir la réduction.

D'autres méthodes mettent l'accent sur un transfert effectif d'informations entre un serveur de coupons et un client, se rapprochant des caractéristiques physiques de couponnage.

Toutefois, aucun système n'implémente de manière complètement électronique le véritable mécanisme du coupon tel qu'il se pratique dans les magasins physiques. En particulier :

Toute l'information se rapportant au coupon (notamment la date de début et de fin de validité, la nature et le montant de la réduction, la description des produits) ne sont pas inclues dans les données transférées depuis le serveur de coupons jusqu'au client.

Il n'est pas possible pour un fabricant disposant d'une présence sur Internet d'émettre des coupons, de contrôler leur distribution auprès d'un groupe sélectionné de revendeurs en ligne, et d'obtenir des statistiques précises sur l'utilisation de ces coupons sur chacun des sites revendeurs sur lesquels ils ont été acceptés.

On connaît en particulier dans l'état de la technique le brevet PCT WO9957670 qui concerne un système de traitement de données émettant des certificats électroniques par des réseaux "en ligne ». Chaque certificat électronique comporte des données de transaction et des données d'identification, et peut être imprimé sur un dispositif d'impression lié à un dispositif d'entrée personnel de consommateur, ou stocké électroniquement dans une base de données désignée jusqu'à une date d'expiration spécifiée. Le certificat de cette solution de l'art antérieur peut être utilisé à des fins diverses, notamment comme coupon pour obtenir un rabais sur un produit ou un service, comme preuve de cadeau ou de prix, comme preuve de réservation, ou comme preuve de paiement. Des consommateurs accèdent au système de traitement de données en ligne, parcourent les options et font leurs sélections. Le système de traitement de données fournit des rapports concernant les certificats sélectionnés et leur utilisation après sélection. Les émetteurs de certificats ont également accès en ligne au système de traitement de données et peuvent former ou revoir des offres, et fournir diverses instructions ayant trait aux certificats, notamment des limitations quant au nombre total de certificats à émettre, et au nombre de certificats à émettre pour chaque consommateur individuel.

Le but de la présente invention est d'améliorer la sécurité du procédé d'émission et de gestion de coupons, en particulier pour permettre à une entité différente de l'entité créatrice d'accepter un coupon avec la certitude que le coupon en question a bien été émis par l'entité de départ, et pour empêcher toute modification non autorisée d'un coupon émis par le système, et également pour optimiser le poids des coupons électroniques afin de faciliter l'échange des coupons entre les différentes entités matérielles du système.

L'invention concerne selon son acception la plus générale un système pour le couponnage électronique comprenant au moins un serveur et des postes clients reliés par un réseau électronique [du type Internet], le serveur de création comportant une unité centrale et des moyens de mémoire pour l'émission de coupons numériques, et les postes clients comportant des moyens pour la gestion électronique des coupons, le poste client comprenant des moyens pour effectuer auprès d'un serveur de coupons une demande de téléchargement de coupons de réductions, le serveur comprenant des moyens pour générer des coupons électroniques constitués par des fichiers signés numériquement caractérisés en ce que le serveur comprenant des moyens pour générer, sur une requête d'un poste client, une instance d'un coupon comprenant l'ensemble des informations caractérisant le coupon ainsi qu'un numéro de série unique, et pour signer et envoyer ledit coupon numérique au client qui conserve cette instance sur son portefeuille de coupons sous forme de fichier. Pour faire valoir le coupon, le client peut s'adresser au serveur de création, ou possiblement à d'autres serveurs agréés par le serveur de création et dont l'adresse est indiquée dans le coupon de réduction, lequel serveur effectuera un certain nombre de vérifications et une notification auprès du serveur de création, avant de valider la réduction, et de réduire le prix à payer par le poste client d'un montant correspondant à ce qui est indiqué sur le coupon numérique.

Le but principal de l'invention est de fournir une solution sécurisée de bout en bout pour chacune des parties en présence permettant à un producteur de biens ou de services (le « site Fabricant ») de créer et de distribuer des coupons électroniques de réductions qui pourront être utilisés sur des sites de vente en ligne (les « sites Revendeurs »), tout en offrant à l'Internaute la possibilité de télécharger, de conserver, d'échanger et d'utiliser leur bon de réduction en ligne.

Le système selon l'invention inclut plusieurs entités possiblement distinctes ayant la possibilité de recevoir et d'envoyer de l'information.

Du côté du poste client, un système est capable d'effectuer auprès d'un serveur de coupons une demande de téléchargement de coupons de réductions (présentés par le dit serveur sous forme de fichiers signés numériquement), de les stocker dans un « portefeuille » de coupons, de permettre un transfert transparent de ces coupons dans le portefeuille d'un autre utilisateur, d'afficher des informations relatives au coupon de réduction, et de faire valoir ce coupon.

Du côté du serveur de coupons, un système peut créer des masques de coupons à partir d'un certain nombre d'informations fournies par l'administrateur du site, les dit masques sont ensuite enregistrés dans une base de données.

Sur une requête d'un client, une instance d'un coupon comprenant l'ensemble des informations caractérisant le coupon ainsi qu'un numéro de série unique est générée, signée et retournée au client qui conserve cette instance sur son portefeuille de coupons sous forme de fichier.

Toutes les informations relatives aux caractéristiques du coupon sont conservées dans le fichier coupon lui-même, à l'exception de la clé privée qui en assure la signature.

Les informations relatives au téléchargement du coupon sont conservées dans une base de données afin de permettre l'analyse a posteriori des informations statistiques concernant le téléchargement par des outils d'analyse de logs.

Le serveur de coupons peut accepter l'utilisation de coupons numériques qu'il à lui même généré ou il peut travailler en conjonction avec les serveurs de coupons de Revendeurs agréés par ses soins.

Le serveur de coupons numériques d'un revendeur peut accepter le faire valoir de coupons numériques émis par des sites Fabricants dont il distribue les produits.

Il est possible du point de vue des coupons de réduction numérique d'être à la fois Fabricant et Revendeur.

L'opération par laquelle un client fait valoir son coupon de réduction est accomplie en envoyant un formulaire contenant les données d'un coupon numérique au serveur de coupons du Revendeur sélectionné. Les informations permettant d'obtenir l'adresse Internet du revendeur sont conservées dans le coupon.

Sur le site du Revendeur, la validité du coupon numérique est vérifiée par le serveur de coupons.

Si le coupon numérique est valide, le serveur de coupons se connecte sur le site marchant et envoie un signal de validation à un composant logiciel, le MS-Session Manager qui est en charge de la modification du prix de la session.

Le client à accès au résultat de l'utilisation du coupon numérique et à sa validation par le biais d'un outil de navigation Internet sur un outil tel qu'un ordinateur

Toutes les informations disponibles sur l'usage des coupons sont enregistrées dans une base de données de manière à empêcher l'utilisation subséquente de deux coupons numériques ayant le même numéro de série, et afin de permettre la mise en place de processus d'analyse statistique concernant l'activité des coupons numériques.

L'objectif de cette invention est de proposer un système permettant de répondre à ces besoins de telle sorte que :
- Il soit possible pour les utilisateurs de connaître toute l'information nécessaire sur les coupons de telle sorte que leur valeur puisse être facilement évaluée et que les coupons numériques puissent être échangés facilement entre utilisateurs.
- Il soit possible pour des sites Fabricants de créer et de financer les coupons de réductions associés à leurs produits. De tels coupons seront acceptés par des vendeurs en ligne, les sites Revendeurs qui proposent leurs produits. Les sites Fabricants approuveront l'utilisation de chaque coupon émis par leur serveur de coupons et obtiendront des informations sur les performances de chacun de leurs Revendeurs. Les méchanismes de sécurité incorporés aux coupons électroniques garantissent que ceux-ci ne peuvent pas être « forgés » par une tierce partie.
- Il soit possible d'obtenir une description visuelle de la réduction, sous forme d'une image incrustée dans le coupon numérique.

Les coupons mis en oeuvre par le système selon l'invention présentent les caractéristiques suivantes :
*Unicité de chaque utilisateur :* l'invention comprend des moyens permettant de s'assurer que chaque utilisateur des coupons de réduction se voit attribuer un numéro de série unique.
*Unicité de chaque coupon créé :* l'invention comprend des moyens permettant de s'assurer que chaque coupon téléchargé et utilisé a un numéro de série unique. Les coupons utilisés seront acceptés sur la base du premier venu - premier servi.
*Tracabilité des coupons :* il est possible de savoir qui télécharge un coupon depuis quel site et qui l'utilise (sur la base du numéro de série de l'utilisateur).
*Extensibilité des règles de promotion :* cela permet au site marchand de créer des types de coupons dont les caractéristiques, en particulier celles relatives à la réduction, varient au cours du temps (ou d'autres facteurs) ; par exemple un coupon numérique dont la valeur décroit linéairement à partir de sa date d'émission.

La présente invention sera mieux comprise à la lecture de la description d'un exemple non limitatif de réalisation qui suit, ce référant aux dessins annexés où :
- la figure 1 représente le schéma de principe du système selon l'invention ;
- la figure 2 représente le schéma fonctionnel du processus de création d'un compte client ;

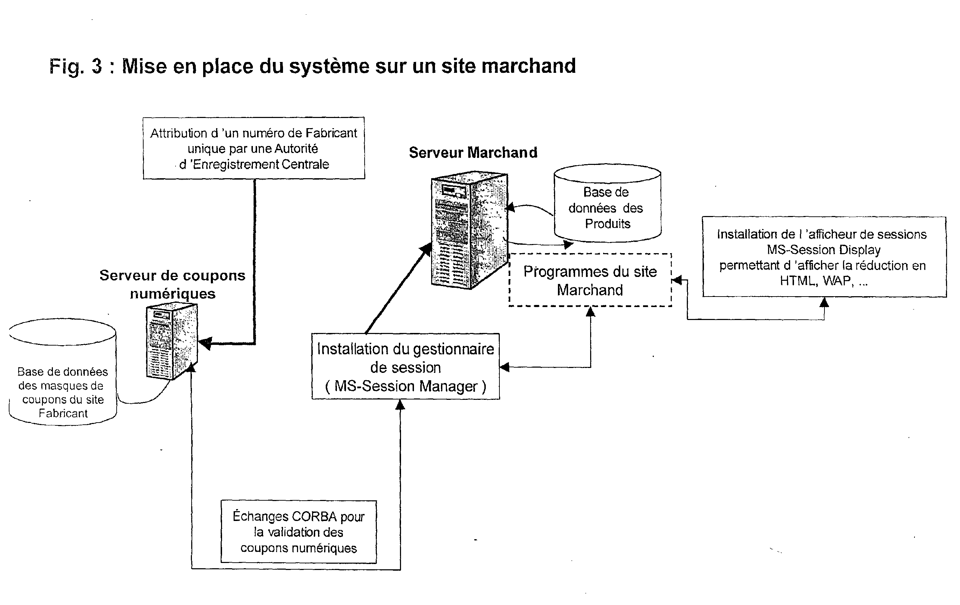

- la figure 3 représente le schéma fonctionnel du processus d'initialisation d'un compte marchand ;
- la figure 4 représente le schéma fonctionnel du processus de création d'un coupon numérique;
- la figure 5 représente le schéma du format d'un coupon ;
- la figure 6 représente le schéma fonctionnel du processus de transfert d'un coupon entre le fabricant et le marchand ;

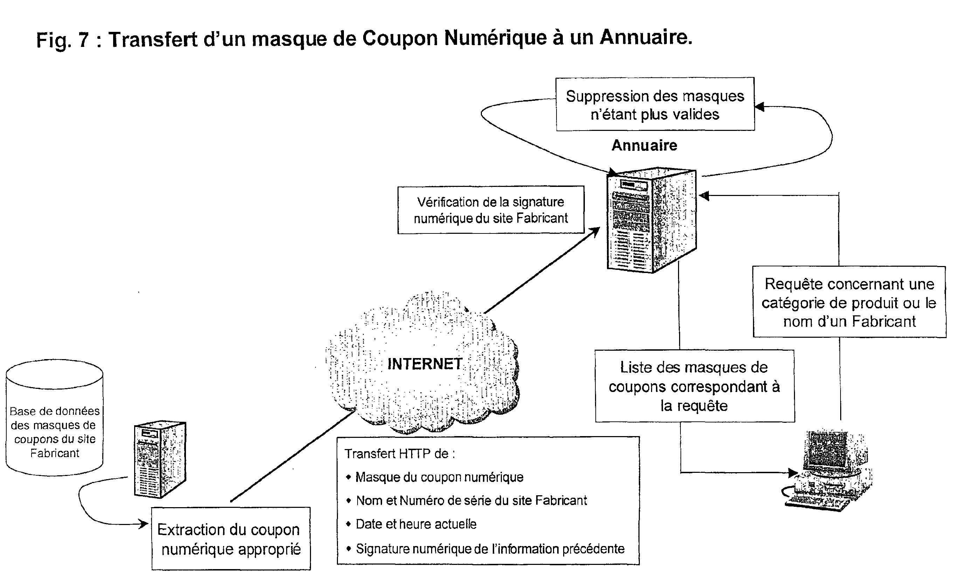

- la figure 7 représente le schéma fonctionnel du processus de transfert d'un coupon vers le serveur ;
- la figure 8 représente le schéma fonctionnel du processus de téléchargement d'un coupon par un client ;
- la figure 9 représente le schéma fonctionnel du processus de manipulation d'un coupon par un client ;

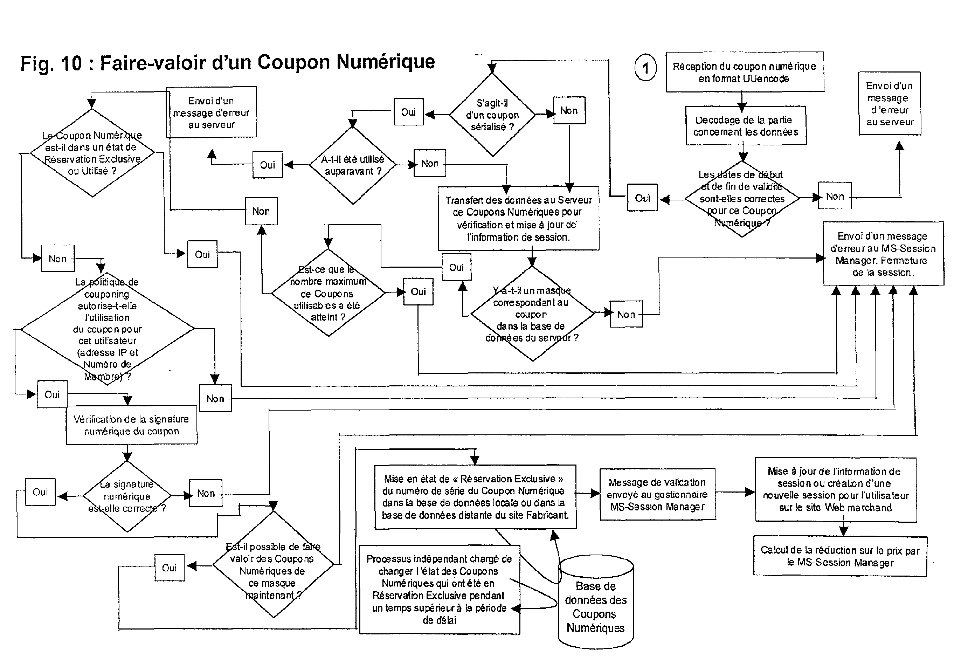

- la figure 10 représente le schéma fonctionnel du processus de recouvrement d'un coupon ;
- la figure 11 représente le schéma fonctionnel du processus d'achat pendant le recouvrement d'un coupon ;
- la figure 12 représente le schéma fonctionnel du processus d'analyse d'une session.

### Interaction entre les entités.

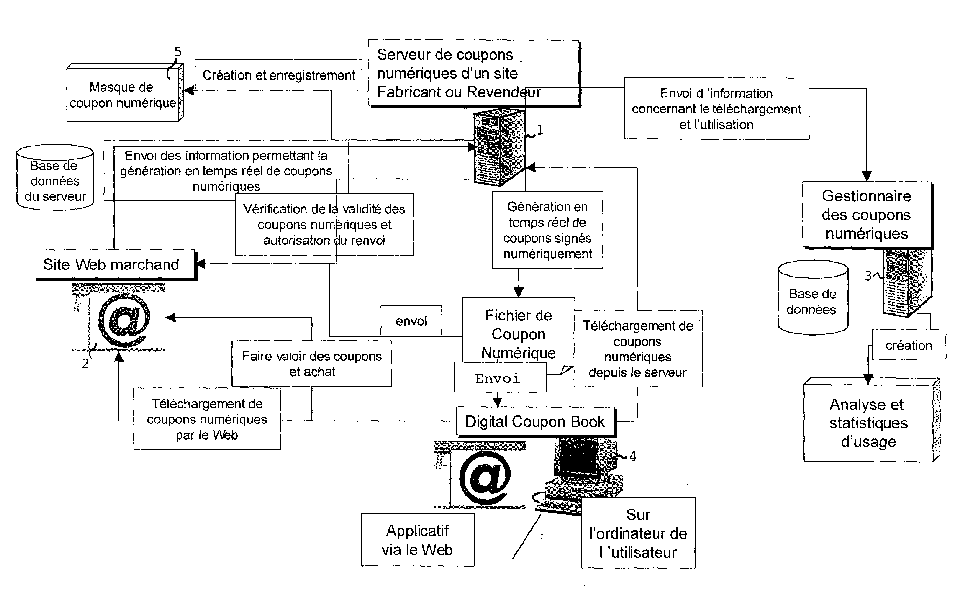

Un système permettant la création, la distribution, et l'utilisation de coupons de réduction numériques est représenté figure 1.

Selon le modèle d'architecture préféré, le système comprend :
- un serveur (1) pour la génération et la distribution des coupons numériques ;
- un poste marchand constituant un serveur de site marchand (2)
- un poste d'administration de coupons numériques (3)
- des postes clients (4).

Le poste client (4) consiste en un ordinateur personnel ou un téléphone portable ou tout périphérique pouvant être raccordé à un réseau de communication, par exemple au Réseau Internet.

Une application spécifique, pour la gestion des coupons numériques et l'enregistrement dans une mémoire vive réside du côté client. Ce logiciel est référencé sous le terme Porte-Coupons [ Digital Coupon Book].

Le serveur de coupons numériques (1) [ Digital Coupon Server] comprend un logiciel dédié à la création de masques de coupons numériques, leur enregistrement dans une base de données (5), et leur transfert sur requête du client.

Le gestionnaire de coupons numériques (3) [Coupon numérique Manager] comprend un logiciel capable d'effectuer des opérations d'analyse statistique sur les téléchargements et les utilisations de coupons numériques, en générant des tableaux synthétiques affichés sous forme de graphiques. Ce logiciel est également capable d'analyser les habitudes d'achats parmi les utilisateurs de coupons numériques et de proposer une politique de couponnage [Coupon Policy] à partir des tables de téléchargement et d'utilisation d'une part, des caractéristiques des utilisateurs d'autre part.

Sur le site marchand (2), le système est capable d'obtenir les résultats en provenance du serveur de coupons numériques (1) et de modifier le prix des produits selon les indications données par ce serveur.

Ce logiciel s'adapte à la technologie mise en oeuvre par le site marchand (2) pour conserver le contexte d'une session, telle que les cookies ou un identifiant de session conservé dans un champs caché d'un formulaire HTML.

Cette application est référencée sous le nom de gestionnaire de session du site marchand (Merchant Site Session Manager).

Dans le contexte de cette invention, l'entité en charge de la création et du financement de la réduction associée aux coupons numériques, sera référencée comme étant le Fabricant.

Le Revendeur sera référencé comme étant l'entité sur laquelle l'utilisateur fait valoir ses coupons.

Le Fabricant et le Revendeur peuvent être la même entité. Toutefois cette situation n'est pas obligatoire.

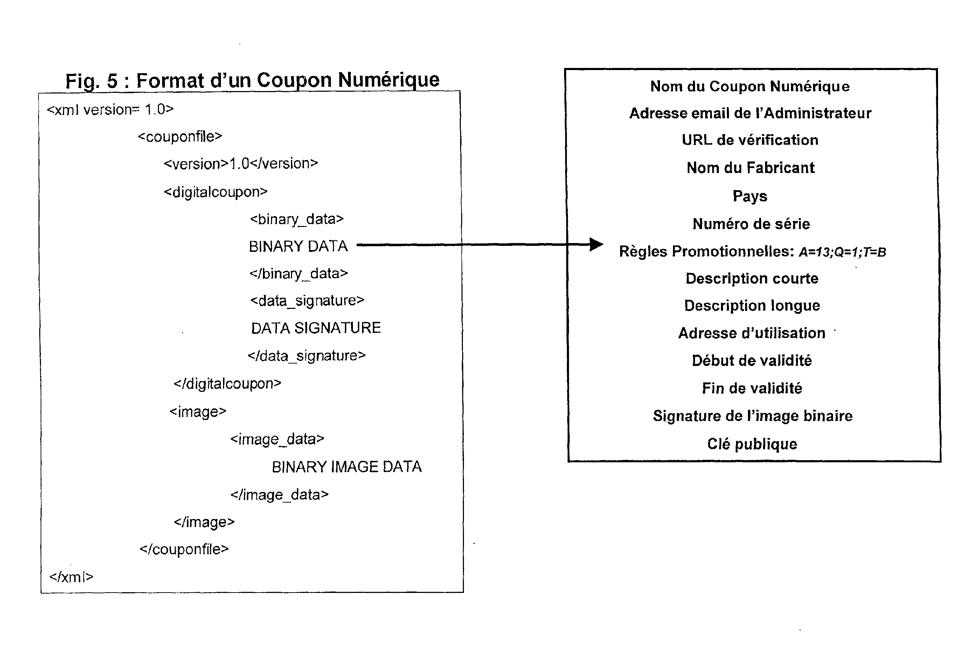

### Caractéristiques des coupons (figure 5).

Le format d'un coupon numérique est représenté en figure 5. Il est défini comme une structure de données décrivant les fonctionnalités du coupon telles que la date de début et de fin de validité, un numéro d'identification unique, et un moyen permettant d'éviter la falsification d'une partie quelconque du coupon.

Le coupon numérique peut également contenir une image, qui sera extraite et affichée par un logiciel approprié.

La mise en oeuvre de référence d'un système de coupon numérique fait appel à une technologie de signature numérique, telle que RSA ou DSS.

Dans cette architecture, le coupon est un fichier signé numériquement comportant des informations sur le Fabricant (l'entité en charge de la création des coupons numériques), les Revendeurs (les entités qui acceptent les coupons créés par le site Fabricant), des informations sur le type et la nature de la réduction, des informations sur la réduction proprement dite exprimées sous la forme de règles de réductions appliquées sous la forme d'un jeu de règles.

Les coupons numériques sont identifiés par une extension commune à leur type de fichier, telle que .cpn.

Les coupons numériques sont également associés à une extension MIME valide, telle que *application/x-cadigitalcoupon* permettant un traitement spécifique par des logiciels appropriés (par exemple un navigateur ou un client émail).

Les informations contenues dans un coupon numérique incluent sans que cette liste soit limitative :
**Nom du coupon :** ce champs permet de décrire en langage humain ce à quoi se rapporte le coupon.
**Numéro de série :** permet d'identifier de manière unique un coupon et de le tracer. Il contient notamment l'identification du Fabricant du coupon numérique.
**Date de début :** le moment à partir duquel le coupon est considéré comme valide.
**Date de fin :** le moment à partir duquel le coupon n'est plus valide.
**Autorité de Certification :** le nom du site Fabricant
**Description courte :** une description succinte du ou des produits bénéficiant de la réduction ou de tout aspect relatif au coupon.
**Description Longue :** une description plus longue des produits ou de tout aspect en rapport avec le coupon.
**Règles promotionnelles :** décrivent les principales caractéristiques de la promotion associée au coupon, tel que les identifiants des produits concernés, le type de la réduction (au nominal ou par pourcentage) et le montant de la réduction.

Il est possible de spécifier une valeur de réduction dégressive en fonction du « temps restant à vivre » au coupon, de fixer un seuil d'achat à partir duquel la réduction sera effective, ou toute autre information.
**Image :** un coupon numérique peut contenir une image, représentation du coupon qui peut être affichée avec une application dédiée.
**Clé publique :** la clé publique correspondante à la clé privée utilisée pour signer le coupon.
**Signature numérique de l'image :** l'image sera signée numériquement en utilisant la même clé privée que celle utilisée pour signer la partie contenant les données. Cet aspect permet de séparer le traitement de l'image et des données sans sacrifier à la sécurité. En particulier, lors de l'utilisation du coupon, seule la partie concernant les données doit être échangée entre le client et le serveur.
**Signature numérique :** la signature numérique est le résultat du chiffrement d'un condensat des données contenues dans le fichier (à l'exception de l'image qui dispose de sa propre signature, elle-même incluse dans la partie des données), la clé privée étant conservée dans la base de données du site Fabricant. L'algorithme de hashing pourra être SHA-1 ou MD5.

Le coupon numérique peut également contenir des informations complémentaires sur l'utilisateur (telle qu'une adresse de courrier électronique et un mot de passe) qui permettront plus de personnalisation pour chaque coupon numérique. Dans ce cas, il est nécessaire que chaque coupon numérique soit créé « en temps réel » pour chaque requête par un utilisateur d'Internet.

D'autres types d'informations se rapportant aux préférences de l'utilisateur et à ses goûts peuvent également être écrits dans le coupon

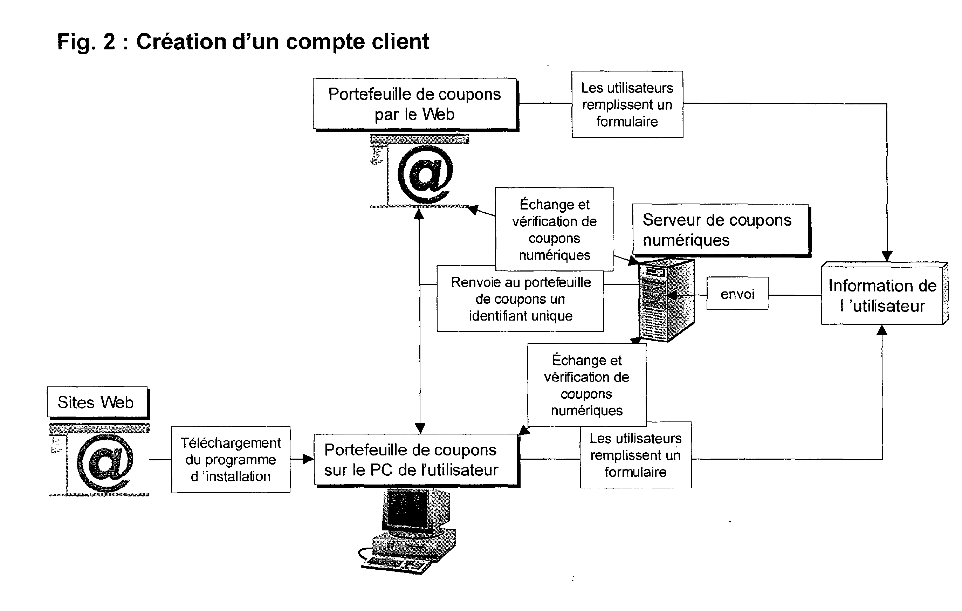

### Création du compte utilisateur. (figure 2)

Le mécanisme préférentiel de mise en oeuvre nécessite que les utilisateurs d'un système de coupons numériques purement électronique s'enregistrent auprès d'un système en ligne.

Pendant l'enregistrement, les caractéristiques des utilisateurs sont enregistrées dans une base de données, et un numéro de série unique (un « Numéro de Membre ») est attribué à chaque utilisateur.

Dans cette architecture, une Autorité d'Enregistrement centralisée s'occupe de l'attribution de numéros de membres uniques pour chaque utilisateur.

Une base de données unique est utilisée pour conserver les caractéristiques des utilisateurs quelle que soit la manière dont ceux-ci enregistrent leurs coupons, que ceux-ci soient conservés sur un serveur de stockage distant accessible par le Réseau Internet, ou à travers une application dédiée sur une machine cliente.

Un mécanisme alternatif n'impose aucune restriction quant à l'enregistrement des utilisateurs et il est possible pour tous d'obtenir et d'utiliser des coupons par un grand nombre de moyens (incluant notamment un navigateur tel qu'Internet Explorer ou Navigator (Marques déposées de Netscape) et de les conserver sur leur ordinateur personnel ou sur une plateforme de stockage distante (accessible par le Web). Aucune indication concernant l'utilisateur du coupon n'est envoyé au serveur lors de son téléchargement ou de son utilisation.

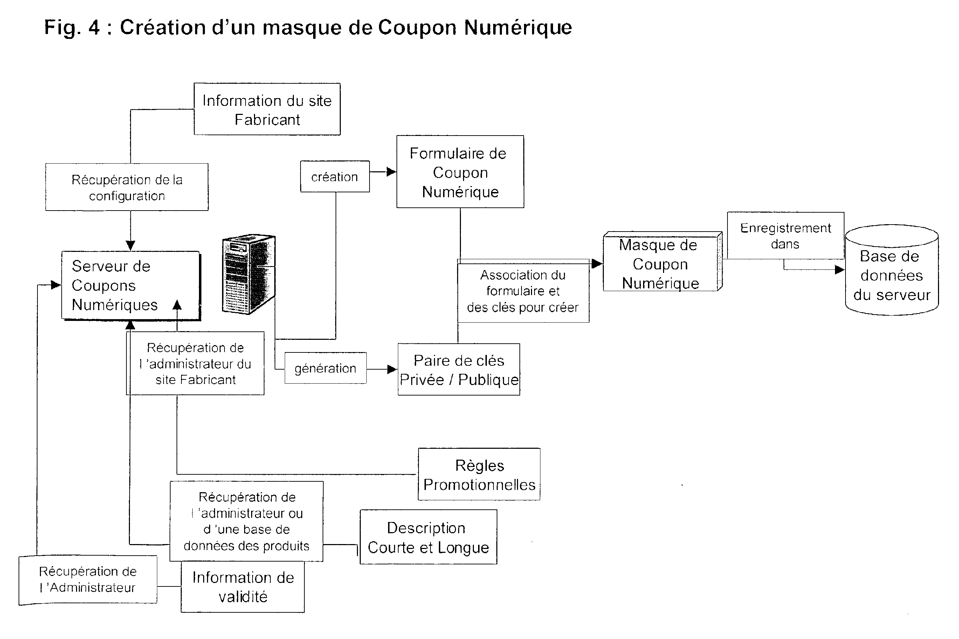

### Création d'un coupon numérique (figure 4)

La création et la distribution aux utilisateurs finaux est réalisée par une entité unique, ou par une entité (le Fabricant) qui en financera l'utilisation auprès d'autres entités (les Revendeurs) avec lesquelles des accords commerciaux ont été préalablement établis.

Le mécanisme préférentiel de la création de coupons numériques inclut un logiciel, le serveur de coupons numériques (1) qui est capable de produire un masque représentant l'ensemble des fonctionnalités des coupons numériques, lequel masque sera ensuite conservé dans une base de données.

Pendant le processus de création de coupons numériques, tous les aspects relatifs à la description du coupon sont rassemblés en utilisant une interface graphique telle qu'un navigateur Réseau Internet.

Une paire de clé publique/privée est générée ainsi qu'un numéro de série de masque [SNTemplate] pour chaque masque d'un coupon numérique.

Toutes ces informations sont enregistrées dans une base de données, le SNTemplate servant d'identificateur unique. Cet aspect fonctionnel permet la création de coupons numériques directement au moment du téléchargement par l'utilisateur, ce qui offre la possibilité d'incorporer des données provenant directement d'un utilisateur (telles qu'un mot de passe unique) et également d'incorporer un numéro de série unique.

Une méthode est décrite permettant de s'assurer de l'unicité du numéro de série d'un coupon non seulement au sein d'une catégorie, mais encore de tous les serveurs générateurs de coupons numériques.

Le numéro de série d'un coupon numérique résulte d'une concaténation du numéro de Fabricant [SNManufacturer], du numéro de masque du coupon [SNTemplate], et du rang du coupon numérique à l'intérieur de ce masque [SNRank].

L'unicité entre tous les numéros de Fabricant doit être garantie par une Autorité Centrale. Il s'agit donc du rôle d'une Autorié de Coordination Globale [Root Coordination System] de s'assurer que deux Fabricants ne partagent pas le même numéro.

L'Autorité de Coordination Globale conserve des tables associant les numéros de Fabricants avec leur identité.

Ces numéros sont incrémentés sous le contrôle de l'Autorité avec chaque nouveau participant au système.

L'unicité d'un numéro de masque de coupon à l'intérieur d'un site Fabricant est le rôle du serveur de coupons.

La base de données centrale dépositaire de tous les masques de coupons conserve tous les numéros générés.

Les nouveaux numéros de masque de coupons sont calculés à partir d'un incrément sur le dernier numéro de masque de coupon généré.

L'unicité du rang d'un coupon numérique [SNRank] est le rôle du mécanisme de création de coupons numériques. Dans un aspect de cette invention, il est possible d'implémenter une sémaphore exclusive en utilisant la mémoire partagée disponible sur un serveur de coupons pour attribuer un SNRank unique à chaque coupon numérique créé, ce qui garantit l'unicité de chacun d'entre eux.

Dans un mécanisme de l'invention, les coupons numériques peuvent être « non sérialisés» : le numéro de série, et donc le fichier comprenant le coupon ne change pas (par convention, le numéro de série se termine par 0000).

Un fichier coupon est généré et servi à la requête d'un utilisateur.

Cette catégorie de coupons n'est pas traçable, mais elle est plus adaptée à la distribution des coupons numériques sur certains types de médias tels que les disquettes et les CD-ROMs, où le coupon ne peut pas facilement être changé. Si un coupon numérique doit être distribué à plus d'un utilisateur par le biais de plusieurs réseaux de distributions physiques, alors le même fichier représentant un coupon numérique doit être valide pour plusieurs utilisateurs. C'est principalement dans ce cas que le concept de coupon numérique non sérialisé devient nécessaire.

Dans un mécanisme alternatif, le numéro de série des coupons numériques est vérifié au moment du faire-valoir, et il s'ensuit qu'aucun numéro de série ne doit avoir été utilisé auparavant.

Une solution pratique à ce problème est de générer les fichiers de coupons en temps réel et de les signer avant de les envoyer aux utilisateurs en réponse à leur requête.

Comme indiqué précédemment, cette solution offre une meilleure personnalisation des coupons numériques, étant donné qu'il est possible si cela est spécifié lors de la création du template d'incorporer des informations propres à l'utilisateur qui demande le téléchargement du coupon, telles que son adresse IP ou son adresse de courrier électronique, suite au remplissage d'un formulaire.

Une autre alternative est de générer les coupons à l'avance, si ceux-ci ne nécessitent pas de personnalisation avec les données provenant des utilisateurs.

Les fichiers de coupons numériques générés de cette manière peuvent être conservés dans une « réserve » située sous un répertoire portant le nom de leur masque de coupon, ce qui permet une récupération plus rapide des coupons.

Une fois le coupon envoyé à l'utilisateur, celui-ci est effacé de la réserve. Ce mode ne permet pas la personnalisation. Il améliore toutefois la vitesse de téléchargement, étant donné que les coupons sont des fichiers déjà existants, ils peuvent être délivrés à l'utilisateur aussi rapidement que du contenu statique tel qu'une page HTML.

Il est possible pour le créateur d'un masque de coupon de spécifier une balance entre les coupons créés en temps réel, et les coupons conservés dans une réserve, en prévision d'un téléchargement statique, plus rapide. Les proportions peuvent être établies pour chaque masque de coupon numérique lors de la création du masque par le biais d'une interface d'administration du serveur de coupons.

Les informations spécifiées par l'administrateur incluent notamment tous les aspects spécifiés pendant la définition du format d'un coupon. En particulier, la date de début et la date de fin de validité d'un coupon numérique sont à prendre en compte en fonction de l'horloge interne du serveur de coupons.

L'URL de faire-valoir d'un coupon numérique est transmise par les Revendeurs et fait partie des données du masque de coupon numérique.

Il est de la responsabilité de l'administrateur de spécifier la politique de téléchargement des coupons numériques, en particulier :

Le nombre maximum de coupons numériques téléchargeables : indique pour un masque donné le nombre maximum de coupons numériques qui pourront être récupérés par les utilisateurs.

Le nombre maximum de coupons numériques à faire-valoir : indique le nombre maximum de coupons numériques que les internautes pourront utiliser.

Il est possible de proposer 2 valeurs différentes pour chacune de ces catégories.

Selon le mécanisme préférentiel de l'invention, le numéro de membre de l'utilisateur est capturé pendant le téléchargement et le processus d'utilisation.

Il est donc possible lorsqu'un utilisateur fait valoir son coupon numérique d'effectuer une comparaison entre les deux numéros de membre sur la base du numéro de série du coupon numérique, et de n'accepter que les coupons qui sont utilisés par les mêmes personnes qui en ont effectué le téléchargement.

L'information concernant la marge brute du produit réalisée lors de la vente du produit peut être écrite lors de la création du masque du coupon. Bien que cette information ne soit pas inscrite pour le coupon numérique lui-même, elle sera utilisable par la suite par le serveur de gestion des coupons numériques.

D'autres types d'informations (telles que le budget marketing alloué à une campagne promotionnelle en ligne) peuvent également être inscrites.

Les coupons numériques peuvent être associés à des mots-clés ; ces mots-clés seront transférés à des annuaires chargés de répertorier les coupons : les adresses où seront récupérés les coupons pourront notamment être localisées par les utilisateurs d'Internet sur une simple recherche autour des mots-clés d'Internet.

Une spécificité de l'invention précise que l'administrateur du serveur de coupons peut demander à être averti par courrier électronique ou par tout autre moyen réseau (tel que SNMP) quand le nombre de coupons numériques téléchargés dépasse une limite indiquée pendant la création du masque du coupon.

Un attribut spécifique, l'attribut de statut [« status flag »] fait partie des informations du masque de coupon. Cet attribut de statut peut être changé à n'importe quel moment par l'Administrateur du site Marchant afin de bloquer le processus de téléchargement ou d'utilisation de l'un des coupons.

Cet attribut de statut est automatiquement changé par le serveur de coupons pour diverses raisons propres au fonctionnement, notamment si le nombre maximum d'utilisations ou de téléchargements de coupons numériques a déjà été atteint.

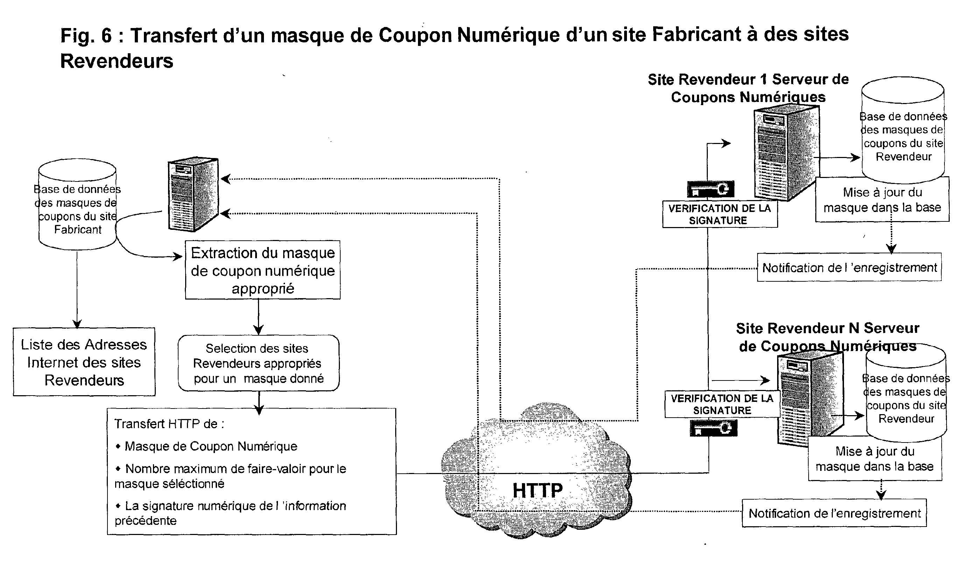

### Distribution de coupons numériques aux sites Revendeurs et aux Annuaires (figure 6)

L'un des prérequis permettant l'échange de coupons numériques entre un site Fabricant et plusieurs sites Revendeurs est que chacune des entités utilise un logiciel dédié pour le transfert et la validation du flux d'informations échangées entre les différents intervenants.

Dans l'architecture de choix de l'invention, un protocole dédié tel qu'IIOP est utilisé pour transférer et valider l'information entre un Fabricant et des Revendeurs sélectionnés.

L'intégrité de l'information ainsi échangée est maintenue à travers l'utilisation de signatures numériques. Un condensat reprenant l'information échangée est chiffré en utilisant la clé privée du Fabricant.

Cette information est ensuite facilement authentifiée par tous les Revendeurs disposant de la clé publique du Fabricant.

La clé publique du Fabricant devra donc être échangée entre le Fabricant et des Revendeurs sélectionnés et vérifiée par un moyen autre que le réseau informatique sur lequel les échanges prendront place (par exemple en utilisant le fax ou le téléphone).

Dans le mécanisme préféré de l'invention, les Revendeurs conservent dans leur base de données les masques de coupons numériques et l'information nécessaire permettant de faire appel aux sites Fabricants pour la validation finale. Une telle information inclut notamment l'URL de faire-valoir permettant d'utiliser les coupons numériques issus d'un masque de coupon.

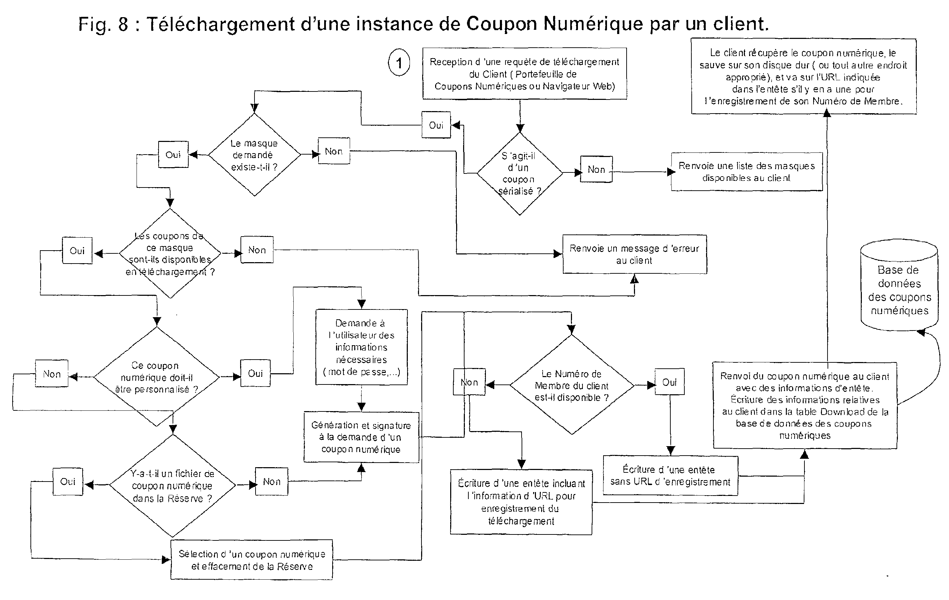

### Téléchargement d'un coupon numérique figure 8)

Selon le mécanisme préférentiel de l'invention, les coupons numériques sont envoyés en format binaire.

Le coupon peut-être accédé directement depuis le navigateur à travers un hyperlien (URL) référant à un programme en charge de la création de coupons, et situé sur le serveur de coupons numériques (1).

Il est ainsi possible, comme on peut se le représenter, d'intégrer l'accès à un coupon numérique à travers une image telle qu'un bandeau publicitaire. Il s'ensuit qu'il est possible pour un utilisateur d'Internet de cliquer sur une bannière représentant sous forme d'image une description précise d'un coupon numérique.

Une bannière de cette sorte contient un lien sur le programme dédié du serveur de coupons numériques (1) avec l'indication du SNTemplate passée à travers la méthode GET (inscrite dans l'URL).

Il est également possible d'accéder au coupon numérique après un achat, dans un courrier électronique, ou en tant que résultat d'une offre promotionnelle. Un hyperlien menant au programme de création de coupon numérique peut être installé partout.

Si le programme de génération de coupons est appelé sans indication de masques, il se contentera de retourner au client la liste des masques disponibles avec les principales indications relatives à chaque masque.

En utilisant l'information qui lui est fournie, le serveur de coupons numérique peut instantier un coupon ou en choisir un parmi ceux disponibles dans la réserve, ou bien encore afficher la liste des masques disponibles.

Le coupon numérique est renvoyé à l'application cliente (typiquement un navigateur) en utilisant un type MIME spécifique, tel que *application/x-ca-digitalcoupon,* et l'information d'enregistrement sous forme d'URL.

L'URL d'enregistrement (specifié dans l'entête du document avec un champs *X-Registration*) permet au programme d'indiquer où l'application cliente peut enregistrer son numéro de membre.

Le navigateur passe de manière transparente cette information au portefeuille de coupons de l'utilisateur qui est enregistré sur l'ordinateur de l'utilisateur comme étant l'application à même de traiter le type MIME correspondant.

Une fois que le coupon numérique est conservé sur l'ordinateur, si l'enregistrement du numéro de membre n'a pas été effectué, le portefeuille de coupons contacte le serveur de coupons numériques (1) à l'adresse d'enregistrement indiquée pour informer que le coupon numérique à été correctement reçu et enregistré dans le portefeuille de coupon, et également pour indiquer le numéro de membre de l'utilisateur.

Le serveur de coupons numériques (1) met à jour sa base de données sur les téléchargements à partir des informations fournies.

Dans un mécanisme alternatif, aucune information concernant le numéro de membre de la personne ayant effectué le téléchargement n'est transmise au serveur de coupons numériques (1).

Le coupon numérique est sauvegardé en tant que fichier sur le disque dur de l'utilisateur (ou sur un serveur distant par le biais du Réseau Internet ou d'un autre protocole) avec une extension explicite, telle que *.cpn.*

Le portefeuille de coupons peut proposer à l'utilisateur le choix de l'endroit où le coupon numérique doit être sauvegardé. L'utilisation de différentes catégories sur le portefeuille donne plus de pouvoir à l'utilisateur pour la gestion de sa liste de coupons en provenance de différents sites fabricants, et constitue l'un des justificatifs majeurs de l'existence du portefeuille de coupons.

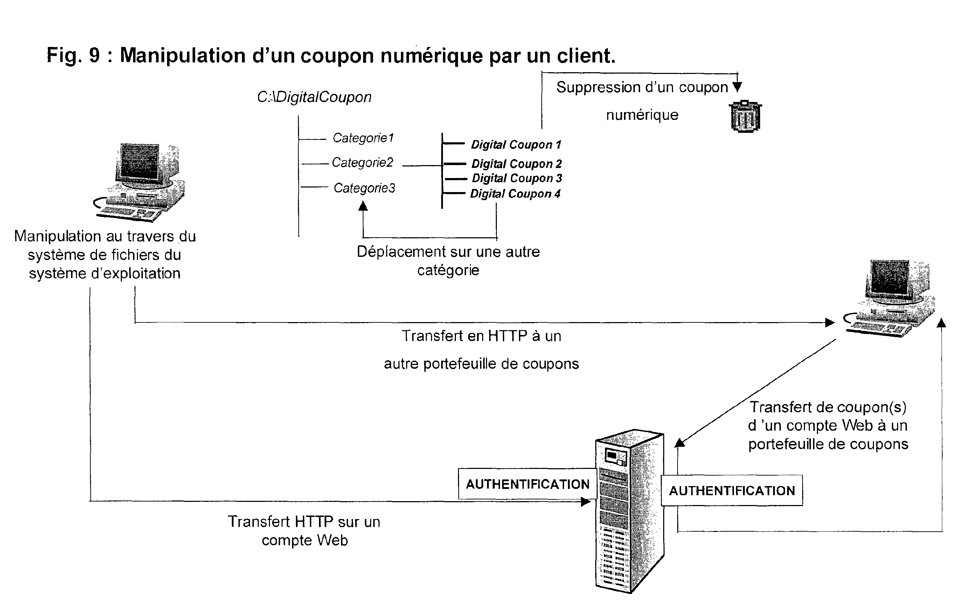

### Gestion d'un coupon numérique (figure 9)

Une méthode est décrite permettant aux utilisateurs d'Internet de manipuler les coupons numériques à partir d'un portefeuille de coupons. Le terme « manipulation » fait référence aux actions qui permettent à l'utilisateur de :
Détruire des coupons numériques.
Vérifier la validité de coupons numériques, notamment ceux transmis par d'autres portefeuilles.
Changer le nom des coupons numériques
Déplacer des coupons numériques dans une autre catégorie
Créer/Détruire/Renommer des catégories
Faire la liste des coupons numériques correspondant à une catégorie de produits/services ou à un site marchand (2) particulier.
Rechercher des coupons numériques
Envoyer des coupons numériques à d'autres utilisateurs

Dans le mode de mise en oeuvre préféré, le coupon numérique réfère à un fichier dont le nom est celui du coupon numérique, une catégorie (telle qu' « aliments pour animaux ») réfère au nom de répertoire, et un site marchand (2) est répertorié également par la création d'un répertoire dédié.

Par conséquent, il est possible de mettre en oeuvre les changements décrits plus haut, par le biais du système de fichier sans être dépendant de l'architecture du système d'exploitation sous-jacent.

Il est possible de transférer des coupons numériques à d'autres utilisateurs d'Internet par courrier électronique ou par d'autres moyens réseaux.

Une application dérivée de la présente invention consiste à construire une liste de coupons numériques disponibles aux utilisateurs d'Internet à travers la création d'un serveur Réseau Internet ou FTP.

Dans une alternative de la présente invention où l'unicité des coupons numériques n'est pas vérifiée pendant l'utilisation (les coupons sont non-sérialisés), il est possible pour les utilisateurs d'Internet de les transférer à d'autres utilisateurs, sans risque pour eux-mêmes de perdre le bénéfice de la réduction (en supposant que les autres conditions de l'utilisation telles que la période de validité sont toujours bonnes).

Dans une autre alternative où le numéro de série est vérifié sur le serveur de coupons au moment de l'utilisation, un tel transfert de coupons accroîtra la probabilité qu'une autre personne utilise le coupon en premier lieu. Dans ce cas où l'unicité du coupon numérique est garantie, seul le premier utilisateur à faire usage du coupon bénéficiera de la réduction associée.

Un système est donc décrit permettant d'aider les utilisateurs à reconnaître si leurs coupons numériques sont non sérialisés (au sens où l'unicité du numéro de série n'est pas vérifié) ou sérialisés (l'unicité du numéro de série est vérifiée).

Le numéro de série des coupons numériques du premier type se termine par 0000, ce qui les rend facilement reconnaissables à la fois du côté serveur et du côté client.

La possibilité de vérification de validité des coupons du côté client est une partie importante du mécanisme de confiance entre les Fabricants, les Revendeurs et les utilisateurs.

En utilisant la clé publique de l'image contenue dans les parties regroupant les données du coupon numérique, il est possible de vérifier l'authenticité de l'image.

Il est également possible de vérifier l'authenticité de la signature numérique du fichier contenant le coupon, ce qui est une étape nécessaire pour s'assurer que le coupon numérique n'a pas été modifié d'une quelconque façon.

La vérification complète suffisante pour affirmer l'authenticité du coupon implique également une confirmation de l'entité qui l'a créée.

Dans une implémentation du système, il est possible de vérifier les coupons numériques en faisant un appel au serveur du coupon avec la clé publique et le numéro de série du coupon numérique.

Le numéro de série contenant le SNTemplate et la clé publique sont comparés par le serveur de coupons sur sa base de données de masques de coupons.

Si un résultat comportant la même clé publique et le même SNTemplate est retrouvé dans la base de données, la preuve est établie que le coupon numérique correspondant au numéro de série indiqué à bien été instancié par ce serveur de coupons numériques (1).

La vérification d'un coupon numérique est sujet au « DNS spoofing » (de même que d'autres types d'applications Internet) dans laquelle l'utilisateur croit que le site du serveur de coupons du Fabricant constitue ce qui est en fait une fausse adresse IP.

Une méthode permettant de s'assurer que le processus de vérification n'est pas sujet au spoofing DNS est d'utiliser une connection SSL, garantie par un certificat d'authenticité pour la vérification.

Un aspect du systme fournit une moyen de chercher des coupons numériques sur la base de mots-clés. Une solution est proposée directement sur l'application de l'utilisateur, le portefeuille de coupons, permettant la recherche à partir de mots-clés.

Ces mots-clés sont ensuite comparés à une base de données de masques de coupons numériques comprenant pour chacun d'entre eux une liste de mots clés.

Les masques de coupons correspondants à la requête sont retournés au portefeuille de coupons de l'utilisateur, où une instance de ce coupon numérique pourra être téléchargée et sauvegardée.

### Spécifications concernant les Règles Promotionnelles.

Une méthode est fournie permettant d'exprimer un ensemble de promotions d'une manière simple, courte, précise et extensible.

Les règles de réductions sont exprimées en utilisant des expressions de la forme : Nom=Valeur.

Elles incluent notamment les expressions suivantes :
A : montant de la réduction. Ce montant représente un pourcentage ou une réduction nominale.
*A=12 ; T=P* représente 12% de réduction. Ce paramètre est requis sauf dans le cas où la réduction réside dans ou produit offert lorsque d'autres sont achetés simultanément. Il est en principe systématiquement exprimé.
T : type. Le type de la réduction. La valeur peut être P (pourcentage), N (nominal) qui est un montant exprimé selon la devise du site marchand (2) ou B (réduction conditionnelle) qui indique que la réduction sera appliquée si d'autres produits du même type sont achetés en même temps.
   Il s'agit d'un paramètre requis qui n'a donc aucune valeur par défaut.
C : devise utilisée pour la réduction. La devise est exprimée en code ISO international. Par exemple USD pour une réduction en dollars américains, et FRF pour des Francs français. Si ce paramètre n'est pas explicité, la propre devise par défaut du site marchand (2) sera utilisée par défaut.
Q : quantité. Par exemple dans « achetez 3 pommes, recevez-en une gratuitement ! », l'expression serait : *Min=3 ; Q=1 ; T=B*
   Ce paramètre étant optionnel (principalement utilisée dans les réductions de type 'B')
CUMUL : cumularif. Indique si la réduction du coupon numérique est cumulative avec d'autres types d'offres promotionnelles.
   Les valeurs possibles sont Y [yes] (pour OUI) et N [no] (pour NON). La valeur par défaut est Y (oui).
Min : minimum. Indique le nombre minimum de produits ou la valeur minimal du ticket de caisse avant que la réduction dûe au coupon ne puisse s'appliquer. Ce paramètre est vérifié au moment du règlement par le MS-Session Manager. Par défaut, aucun minimum ne s'inscrit.
CAT : category. Indique si la réduction est applicable à l'identifiant du produit mentionné dans le coupon numérique (P), à une catégorie (C) suivie de l'identifiant de la catégorie, ou sur n'importe quel achat à l'intérieur de la boutique (G).
   Un exemple d'une telle réduction serait : *T=N ; A=8 ; Min=100 ; CUMUL=N ; C=USD ; CAT=G*
   Qui signifie « appliquer une rédiction de 8 $ sur tout achat de $100 ou plus sur l'ensemble des produits de la boutique. Cet achat n'est pas cumulable ».
   Il n'y à pas de valeur par défaut.
   Si un identifiant n'est pas nécessaire, il ne sera indiqué, ceci afin de conserver les règles promotionnelles aussi courtes que possible.

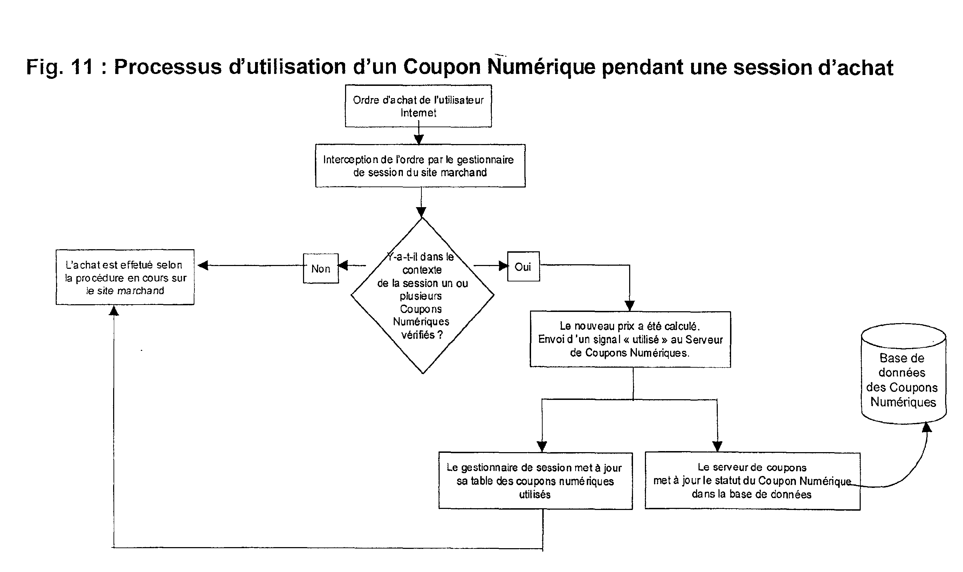

### Utilisation d'un coupon numérique (figure 11)

Le système inclut un moyen pour l'utilisateur de faire valoir un coupon, et par conséquent de bénéficier d'une réduction lors d'une session d'achat sur un système marchand en ligne.

Une session d'utilisation d'un coupon se décompose en 3 étapes successives :
**Verification** : un certain nombre de tests sont effectués permettant de s'assurer de la validité du coupon numérique.
**Réservation exclusive [Locking] :** pendant cet état, le coupon numérique une fois validé est inséré dans une session de l'utilisateur, mais le processus d'achat n'a pas été achevé par l'utilisateur Internet.
**Utilisation [Redeem] :** le coupon numérique à été pris en compte lors de la validation de l'achat, et s'il s'agit d'un coupon sérialisé, il n'est plus valide.

Selon le mécanisme d'implémentation favori, le logiciel présent sur le poste client (le portefeuille de coupons) est utilisé pour vérifier que la date de fin de validité du coupon numérique n'a pas été dépassée.

Si la date de validité n'est pas correcte, un message d'avertissement est renvoyé à l'utilisateur et le coupon numérique est détruit (suivant confirmation de l'utilisateur).

Dans le cas où le site Fabricant est lui-même Revendeur, une seule URL sera présente pour faire valoir le coupon.

Si le Fabricant est distinct du ou des Revendeurs, et que plusieurs Revendeurs ont été sélectionnés, chacun d'entre eux acceptant l'utilisation du coupon numérique, alors l'utilisateur doit choisir l'URL correspondant au site Revendeur de son choix.

A partir de ce choix, le portefeuille de coupons construit une page HTML (ou toute autre page adaptée au format de la plateforme cliente contenant le portefeuille de coupons) comportant un formulaire qui doit être renvoyé à l'URL d'utilisation.

Ce formulaire contient [en format uuencode] la partie du coupon numérique correspondant aux données, ainsi que le numéro de membre de l'utilisateur.

L'information de session en liaison avec le poste client peut être dérivée d'un cookie ou d'un identifiant de session conservé dans le champs caché d'un formulaire, ou bien encore d'une URL utilisée pour accéder au site marchand (2).

Si l'utilisateur était au milieu d'une session d'achat sur le site marchand, alors l'information d'identification de la session est associée avec l'utilisateur en même temps que la réduction appropriée. Cette information d'identification est incluse dans le formulaire qui est renvoyée au site pour bénéficier de la réduction.

Tous les champs du formulaire sont « cachés », ce qui signifie qu'ils ne sont pas directement visibles à l'affichage sur la page HTML.

Selon le mécanisme d'implémentation favori, ce formulaire est lancé automatiquement en utilisant Javascript ou tout autre language disponible sur le poste client. Si l'utilisateur a désactivé le langage utilisé, il doit cliquer sur le bouton d'envoi du formulaire.

Le formulaire est envoyé à l'URL spécifiée avec le numéro de membre et l'information de session.

Une fois que le formulaire a été envoyé à l'URL d'utilisation, le coupon numérique est déplacé dans un répertoire où les coupons utilisés sont conservés. Selon le mécanisme par défaut, les coupons utilisés ne sont pas supprimés, en dépit de ce que si le processus permettant de le faire valoir réussit et si le coupon est sérialisé, celui-ci ne sera plus valide.

L'URL d'utilisation [Redeem URL] appelle le gestionnaire de session [MS-Session Manager] qui communique avec le site marchand auquel il est interfacé, et avec le serveur de coupons numériques (1).

Une méthode est inclue dans l'invention qui indique au gestionnaire de session de réaliser une opération de décodage (uudecode) de la partie concernant les données du coupon numérique, et de mettre à jour l'information de session de l'utilisateur sur le serveur marchand, que cette information soit conservée dans un fichier, sur un serveur de base de données, ou dans la mémoire du serveur du site marchand.

Le gestionnaire de session agit comme un proxy vis-à-vis du serveur de coupons numériques (1).

Le gestionnaire de session examine tout d'abord le numéro de série du coupon numérique. Si ce coupon est sérialisé, alors le gestionnaire examine son cache pour savoir si un coupon numérique avec le même numéro de série à déjà été utilisé. Si c'est le cas, un-message d'erreur est renvoyé à l'utilisateur (à travers une page HTML ou tout autre format adapté à la communication avec le périphérique client).

Si ce n'est pas le cas, une entrée correspondante au numéro de série est écrite dans ce cache.

Si le numéro de série est valide pour l'utilisation, une session CORBA est ouverte du gestionnaire de session jusqu'au serveur de coupon par lequel les données avec le numéro de membre de l'utilisateur ainsi que d'autres paramètres tels que son adresse IP sont envoyés au serveur de coupons.

Le serveur de coupons vérifie en premier lieu la date de début et de fin de validité du coupon. Si la date actuelle ne coïncide pas entre ces deux dates, un message d'erreur est renvoyé à travers la session et affiché au poste client par le gestionnaire de session.

Si la date est comprise entre les dates de début et de fin indiquées dans le coupon, alors le serveur de coupons observe le SNTemplate, partie intégrante du numéro de série du coupon. Si le coupon numérique a été créé par le serveur de coupons du site Revendeur (ie ce Revendeur est également le Fabricant du coupon numérique), alors la vérification s'effectue en utilisant la base de données propre à ce serveur de coupons.

Si ce n'est pas le cas, la vérification s'effectue en utilisant l'information de masque fournie par le Fabricant. Cette information comprend la clé publique du masque qui est nécessaire pour vérifier et valider l'inaltération du coupon numérique.

Selon ce mécanisme d'implémentation de la solution, il est requis que toute l'information nécessaire relative au masque du coupon numérique soit inclue dans la base de données du serveur de coupons numériques (1).

Bien qu'il soit possible pour effectuer la vérification de chaque coupon numérique de faire une requête auprès de la base de données distante du site Fabricant originel, une telle action serait inefficace en terme de temps, considérant que l'ensemble du processus de vérification s'effectue en temps réel, et donc suppose une contrainte temporelle importante.

Si l'information extraite de la base de données est manquante ou incomplète, un message est renvoyé au gestionnaire de session, qui à son tour alerte l'utilisateur en indiquant que ce site Revendeur n'est pas prêt à accepter le coupon numérique créé par ce site Fabricant particulier.

Le processus de vérification inclut une étape permettant de s'assurer que le nombre maximum de coupons à faire valoir n'a pas déjà été atteint. Si le nombre maximum de coupons numériques pour un masque donné a déjà été atteint, un message d'erreur approprié est renvoyé au gestionnaire de sessions, et le champ de statut est mis à jour pour ce masque dans la base de données du site Fabricant.

Le processus de vérification comprend une étape de vérification du champ du statut pour le masque de coupon numérique en question. Si, pour une raison spécifique, le processus d'utilisation a été interdit par l'administrateur du serveur de coupons du site Fabricant ou rendu invalide par l'une des étapes du processus de vérification, un message d'erreur approprié est renvoyé au gestionnaire de sessions.

Le processus comprend une étape permettant de s'assurer que le numéro de série du coupon numérique n'est pas dans un état de *Réservation Exclusive* ou *d'Utilisation.* Si le coupon numérique a été dans une position de *Réservation Exclusive* par le même processus pendant une durée supérieure au délai d'expiration (tel que paramétré dans l'interface d'administration), ce coupon revient dans une position de *Verification*. Si le coupon numérique n'est pas disponible, un message d'erreur est retourné au gestionnaire de session.

Le processus comprend une étape permettant de s'assurer que le même masque de coupon n'est pas utilisé plusieurs fois par la même adresse IP si la politique promotionnelle de couponnage l'interdit.

Si la politique de couponnage requiert que les coupons de ce SNTemplate soient utilisés par les mêmes utilisateurs qui l'ont téléchargé, une requête est effectuée sur la base de données du serveur de coupons du site Fabricant permettant d'obtenir le numéro de membre de la personne ayant téléchargé ce coupon, et de vérifier qu'il est identique à celui de la personne demandant l'utilisation du coupon. Dans le cas contraire, l'usage du coupon numérique n'est pas accepté et un message d'erreur est renvoyé au gestionnaire de sessions.

Le processus comprend une étape pour vérifier la signature numérique du coupon. La clé publique inclue dans le coupon est vérifiée par rapport à la clé publique dérivée de la base de données pour ce masque de coupons. Cette clé dérivée du coupon est ensuite utilisée pour déchiffrer la signature numérique et la comparer au condensat résultant de l'utilisation d'un algorithme de hash sur la partie reprenant les données au niveau du coupon.

Si toutes ces étapes sont validées, le coupon numérique entre dans un état de « Réservation *exclusive » :* le serveur de coupons numériques (1) attend confirmation par le gestionnaire de sessions de l'utilisation du coupon par l'utilisateur.

La base de données du site Fabricant est mise à jour.

Si le coupon a été créé par un serveur de coupons d'un site Fabricant spécifique, il est nécessaire de passer ce coupon en *Réservation Exclusive* sur ce système, afin que deux sites Revendeurs différents ne puissent pas réserver en exclusivité le même coupon.

Dans ce mécanisme d'implémentation, une requête permettant de réserver ce coupon numérique en usage exclusif est envoyé au serveur du site Fabricant comportant toute l'information nécessaire devant être inscrite dans la base de données, telle que le numéro de membre de l'utilisateur qui fait valoir ce coupon.

Le serveur de coupons du Fabricant met à jour cette information dans sa base de données des utilisations et renvoie au serveur de coupons du Revendeur soit une confirmation de Réservation Exclusive, soit une indication que le coupon ne peut pas être placé en état de Réservation Exclusive accompagné d'un message d'explication (ce qui est le cas si par exemple le coupon numérique vient d'être réservé par le serveur de coupons d'un autre site Revendeur).

Après avoir été placé en état de Réservation Exclusive, le serveur de coupons renvoie un message de validation au gestionnaire de sessions, qui à son tour calcule la réduction accordée à l'utilisateur à travers les spécifications indiquées dans les Règles Promotionnelles.

Les Règles Promotionnelles représentent un ensemble de spécifications codées qui spécifient la nature des réductions que le coupon numérique matérialise, et comment celles-ci se traduisent en gain financier ou en produits gratuits pour l'acheteur par rapport à la situation actuelle de son panier d'achat.

Le prix mis à jour, prenant en compte les Règles Promotionnelles est écrit dans le système de gestion de la session utilisée pour le site marchand (2). Un nouveau prix global est par conséquent calculé pour cette session.

Un coupon numérique restera en état de « Réservation Exclusive » aussi longtemps que la session d'achat n'aura pas été achevée ou qu'un délai d'inactivité n'aura pas expiré, ce qui laisse à l'acheteur un intervalle de temps suffisant pour lui permettre de continuer ses achats sur le site marchand.

Ce délai d'inactivité peut être différent pour chaque masque de coupon et spécifié par l'administrateur du serveur de coupons pendant la création de ce masque.

Si ce délai expire et que le coupon numérique n'a pas été consommé dans l'intervalle, le coupon en question revient à un état de disponibilité et un message est renvoyé à l'utilisateur lui expliquant la cause de la non-prise en compte du coupon numérique.

Un coupon numérique est considéré comme étant *Utilisé* une fois que le processus d'achat a été achevé, ce qui inclut en général (mais pas systématiquement) la transmission par l'acheteur sur Internet de ses coordonnées bancaires.

Certains sites marchands considèrent qu'une transaction est validée sans pour autant nécessiter la transmission de coordonnées bancaires, avec certains de leurs clients avec lesquels une telle transaction bancaire a déjà eu lieu et pour lesquelles les coordonnées bancaires ont été conservées.

Une fois que le processus d'achat est terminé aussi bien du point de vue du site marchand (2) que du point de vue de l'acheteur, un appel à l'URL du gestionnaire de session est effectué généralement au travers d'une page HTML (ou de toute autre page capable d'être interprétée par le périphérique du client).

Le gestionnaire de session met ensuite à jour le serveur de coupons avec l'information concernant le processus d'achat.

L'information collectée par le serveur de coupons numériques (1) pendant cette étape de confirmation inclut notamment le montant des produits achetés, l'adresse IP de l'utilisateur, ainsi que la date et l'heure courante.

Toutes ces informations sont enregistrées dans une base de données, afin de permettre une analyse par le gestionnaire de coupons.

Que ce coupon ait ou non apporté sa réduction, si le serveur de coupon du Fabricant n'est pas le même que celui du Revendeur, une requête de mise à jour doit être effectuée sur le serveur de coupons du site Fabricant.

Tout coupon numérique bloqué en écriture sera libéré à nouveau (notamment si la durée de temps a expiré).

Tout coupon numérique ayant servi à une réduction sera indiqué comme ayant servi dans la base de données du serveur du site Fabricant.

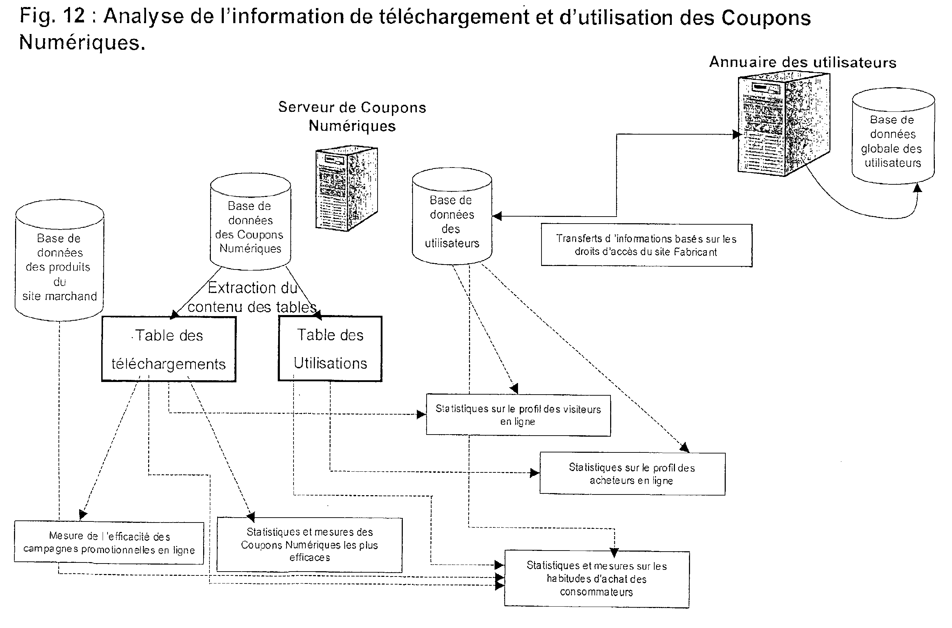

### Analyse de l'information par le gestionnaire de coupons (figure 12).

Le gestionnaire de coupons comprend des fonctionnalités permettant d'analyser la politique de couponnage et d'effectuer des rapports statistiques concernant les habitudes de l'utilisateur et ses caractéristiques de consommateur.

Une méthode est proposée permettant de corréler l'information collectionnée pendant les processus de téléchargement et d'utilisation, notamment les numéros de membres, avec l'information que ces membres indiquent lorsqu'ils s'enregistrent pour bénéficier des fonctionnalités du portefeuille de coupons.

Cette accumulation d'information rend possible l'établissement de caractéristiques d'usage des coupons numériques par age, par sexe, par statut social, par type de métier ou d'autres types d'information, et de créer les statistiques moyenne de consommation par site Internet marchand pour chaque masque de coupon.

## Revendications

1. Système pour le couponnage électronique comprenant un ou plusieurs serveurs et des postes clients reliés par un réseau électronique [du type Internet], le serveur comportant une unité centrale et des moyens de mémoire pour l'émission de coupons numériques, et les postes clients comportant des moyens pour la gestion électronique des coupons, le poste client comprenant des moyens pour effectuer auprès d'un serveur de coupons une demande de téléchargement de coupons de réduction, le serveur comprenant des moyens pour générer des coupons électroniques constitués par des fichiers signés numériquement, **caractérisé en ce que** le serveur comprenant des moyens pour générer, sur une requête d'un poste client, une instance d'un coupon comprenant l'ensemble des informations caractérisant le coupon ainsi qu'un numéro de série unique, et pour signer et envoyer ledit coupon numérique au client qui conserve cette instance sur son portefeuille de coupons sous forme de fichier.

2. Système pour le couponnage électronique selon la revendication 1, **caractérisé en ce que** le coupon électronique comprend les informations constituées par le nom du coupon, un numéro de série pour l'identification de manière unique dudit coupon, une date de début de validité dudit coupon, une date de fin de validité dudit coupon, un identifiant de l'autorité de Certification, une description du ou des produits bénéficiant de la réduction ou de tout aspect relatif au coupon, des informations relatives aux règles promotionnelles, une clé publique correspondante à la clé privée utilisée pour signer le coupon et une signature numérique de l'image utilisant la même clé privée que celle utilisée pour signer la partie contenant les données.

3. Système pour le couponnage électronique selon la revendication 2, **caractérisé en ce que** le coupon électronique comprend en outre une signature numérique constituée par le résultat du chiffrement d'un condensat des données contenues dans le fichier coupon, à l'exception de l'image qui dispose de sa propre signature, elle-même incluse dans la partie des données.

4. Système pour le couponnage électronique selon la revendication 2 ou 3, **caractérisé en ce que** le serveur de création des coupons ( le Fabricant) envoie une description des types de coupons créés par lui à d'autres serveurs opérés par des organismes distincts ( les Revendeurs) avec des indications sur le nombre de coupons que chaque Revendeur peut accepter, chaque utilisation sur un site Revendeur d'un coupon créé par le Fabricant s'effectuant sous contrôle de ce dernier.

5. Système pour le couponnage électronique selon la revendication 2 ou 3 ou 4, **caractérisé en ce que** le coupon numérique contient en outre des informations complémentaires sur l'utilisateur [telle qu'une adresse de courrier électronique et un mot de passe].

6. Système pour le couponnage électronique selon l'une quelconque des revendications précédentes, **caractérisé en ce que** chaque coupon numérique est créé « en temps réel » pour chaque requête par un utilisateur d'Internet.

7. Système pour le couponnage électronique selon l'une quelconque des revendications précédentes, **caractérisé en ce que** le serveur de coupons comprend des moyens pour créer des masques de coupons à partir d'informations comprenant un numéro unique de coupon, une adresse de validation, une date de validité, et une clé publique, les dit masques étant ensuite enregistrés dans une base de données.

8. Système pour le couponnage électronique selon l'une quelconque des revendications précédentes, **caractérisé en ce qu'**il comprend des moyens pour identifier chaque utilisateur de manière unique, chaque coupon comportant un numéro de série unique, un ensemble d'informations sur le Fabricant du coupon, une date de début ainsi qu'une date de fin de validité, une indication d'adresse où utiliser le coupon, l'association du coupon avec un produit ou un ensemble de produits, des règles promotionnelles (appelées « discount rules ») comportant notamment des indications sur le montant, la monnaie utilisée et la nature de la réduction ; et un système pour ranger cette information dans une base de données.

9. Système pour le couponnage électronique selon l'une quelconque des revendications précédentes, **caractérisé en ce que** l'information d'adresse d'utilisation du coupon est une adresse Réseau Internet (URL).

10. Système pour le couponnage électronique selon l'une quelconque des revendications précédentes, **caractérisé en ce que** le coupon numérique est divisé en deux parties indépendantes, la première partie contenant les données du coupon numérique concernant l'ensemble des informations sur la réduction et la seconde partie étant une image qui peut être affichée par un moyen de visualisation du poste client, chaque partie étant protégée par une signature numérique utilisant un algorithme de hashage ainsi qu'une paire de clé publique/privée.

11. Procédé pour le couponnage électronique comportant une étape de génération d'un coupon numérique par un serveur, une étape de transmission à un poste client, **caractérisé en ce que** le coupon électronique comprend les informations constituées par le nom du coupon, un numéro de série pour l'identification de manière unique dudit coupon, une date de début de validité dudit coupon, une date de fin de validité dudit coupon, un identifiant de l'autorité de Certification, une description du ou des produits bénéficiant de la réduction ou de tout aspect relatif au coupon, une information relative aux règles promotionnelles, une clé publique correspondante à la clé privée utilisée pour signer le coupon et une signature numérique de l'image utilisant la même clé privée que celle utilisée pour signer la partie contenant les données.

12. Procédé pour le couponnage électronique selon la revendication 11, **caractérisé en ce que** la distribution de coupons ainsi que leur utilisation peuvent-être restreintes selon l'adresse IP ou le numéro de membre des utilisateurs, et **en ce qu'**il est possible de demander que la personne qui utilise le coupon soit la même que celle qui l'ait demandé.

13. Procédé pour le couponnage électronique selon la revendication 12, **caractérisé en ce que** la signature numérique de l'image incrustée dans le coupon est intégrée à la partie contenant les données.

14. Procédé pour le couponnage électronique selon la revendication 13, **caractérisé en ce que** l'information relative à la réduction est associée à un produit, un ensemble de produits d'un site marchand (2), ou le panier d'achat complet du consommateur, quels que soient les produits du site marchand (2) qui y sont rattachés, et **en ce que** les informations relatives à la réduction associée au coupon sont exprimées à l'intérieur d'une structure autonome dans les données du coupon numérique, une telle structure consistant en un ensemble extensible de règles, appelé «discount rules».

15. Procédé pour le couponnage électronique selon la revendication 14, **caractérisé en ce que** le montant et le type de la réduction sont dépendants de paramètres tels que la durée de vie du coupon numérique, ou un montant minimum d'achats sur le site marchand, **en ce que** la valeur du coupon est une fonction du temps ou de la nature d'autres coupons du même type ou d'un type différent et **en ce que** la signature numérique du coupon est effectuée en temps réel, au fur et à mesure qu'une demande de téléchargement de coupons numériques est effectuée par le client afin de permettre la personnalisation du coupon numérique avec une information en provenance de l'utilisateur, [telle qu'un mot de passe, une adresse de courrier électronique ou tout autre information]..

16. Procédé pour le couponnage électronique selon la revendication 15, **caractérisé en ce que** les coupons numériques sont créés, signés numériquement et stockés dans des fichiers disponibles sur la plateforme du serveur de coupons numériques (1) (« coupon numérique server ») afin de permettre un téléchargement plus rapide du coupon numérique par le client.

17. Procédé pour le couponnage électronique selon la revendication 16, **caractérisé en ce qu'**il comporte une étape au cours de laquelle le serveur renvoie au client l'adresse à laquelle il doit se connecter pour enregistrer le téléchargement d'un coupon afin de permettre l'enregistrement du Numéro de Membre du client.

18. Procédé pour le couponnage électronique selon la revendication 17, **caractérisé en ce que** le masque des coupons numériques est propagé depuis le serveur de coupons d'un site Fabricant au serveur de coupons d'un site Revendeur autorisé par le site Fabricant à effectuer des réductions sur un type donné de produits.

19. Procédé pour le couponnage électronique selon la revendication 10, **caractérisé en ce que** le protocole en usage entre le client et le serveur est SSL sur HTTP.

20. Procédé pour le couponnage électronique selon l'une quelconque des revendications 10 à 19, **caractérisé en ce que** chaque application client est identifiée de façon unique.

21. Procédé pour le couponnage électronique selon l'une quelconque des revendications 10 à 20, **caractérisé en ce qu'**il comporte une étape de vérification de l'intégrité et validation d'un coupon numérique donné à un instant donné consistant à présenter au serveur ayant créé le coupon des informations relatives à la réduction, et à recevoir une confirmation de validité de la part du serveur ou à générer un message d'erreur par le serveur et renvoyé au client si le coupon numérique n'est pas ou plus valide.

22. Procédé pour le couponnage électronique selon l'une quelconque des revendications 10 à 21, **caractérisé en ce que** l'entité (« site Revendeur ») qui accepte la réduction associée au coupon numérique est différente de l'entité qui a créé le dit coupon numérique (« site Fabricant »), afin d'assurer la réservation exclusive d'un coupon numérique disposant d'un numéro de série donné dont l'accès est partagé par un ou plusieurs site Revendeurs.

23. Procédé pour le couponnage électronique selon l'une quelconque des revendications 10 à 22 **caractérisé en ce qu'**il comporte une étape permettant à l'utilisateur de bénéficier de la réduction associée à un coupon numérique par un seul clic de souris et après vérification par le serveur de coupons de la validité dudit coupon, des informations concernant tous les aspects de la transaction (nature et numéro de série du coupon, numéro de l'acheteur) sont enregistrées dans une base de données, le prix des achats effectués sur un site marchand (2) étant soustrait du montant correspondant aux spécifications indiquées dans le coupon numérique corrélées avec les informations en provenance de la base de données de coupons du site Fabricant, et un ordre d'achat est généré concernant l'achat effectué par le client, les informations concernant l'utilisation du coupon numérique sont stockées dans une base de données.

24. Procédé pour le couponnage électronique selon l'une quelconque des revendications 10 à 23 **caractérisé en ce que** les informations d'utilisation sont propagées au site Fabricant du coupon numérique par le biais de CORBA.

25. Procédé pour le couponnage électronique selon l'une quelconque des revendications 10 à 24 **caractérisé en ce** le client effectuant la demande d'utilisation auprès du site Revendeur est identifié de manière unique.
